# EUROPÄISCHE PATENTSCHRIFT

(11) **EP 1 640 251 B1**
(45) Veröffentlichungstag und Bekanntmachung des Hinweises auf die Patenterteilung: **14.11.2007**
(21) Anmeldenummer: 05018458.9
(22) Anmeldetag: 25.08.2005
(51) Int. Cl.: B62D 21/12

(54) **Nutzfahrzeug mit einem Aggregategestell und einem Aufbaurahmen**
Utility vehicle with aggregate frame on a sub-frame
Véhicule utilitaire avec support d'un agrégat sur un châssis auxiliaire

(30) Priorität: 24.09.2004 AT 16012004
(43) Veröffentlichungstag der Anmeldung: 29.03.2006
(73) Patentinhaber: MAN Nutzfahrzeuge Österreich AG, 1230 Wien (AT)
(72) Erfinder: Ebert, Rudolf, 36304 Alsfeld (DE); Götz, Dieter, Dipl.-Ing.(FH), 85276 Pfaffenhofen (DE); Ribo, Franz, Ing., 1220 Wien (AT)

(56) Entgegenhaltungen:
- EP-A- 0 316 600
- DE-A1- 10 214 495
- DE-U1- 9 308 329
- DE-U1- 29 800 368
- US-A- 3 359 752

## Beschreibung

Die vorliegende Erfindung betrifft ein Nutzfahrzeug, insbesondere einen Lastkraftwagen, mit einem Aggregatgestell und einem Aufbaurahmen, wobei das Nutzfahrzeug einen Fahrzeugrahmen mit Rahmenlängsträgern aufweist und wobei das Aggregatgestell und der Aufbaurahmen Längsträgerelemente aufweisen, die an den Rahmenlängsträgern befestigt sind.

Derartige Fahrzeuge sind aus dem Stand der Technik bekannt. Ein gattungsgemässes Dokument ist bereits bekannt, zum Beispiel US 3359752. Insbesondere bei schweren Sonderfahrzeugen ist hinter dem Fahrerhaus ein Aggregatgestell, beispielsweise ein Kühlergestell, angeordnet, an das sich ein Aufbaurahmen, beispielsweise für eine Ladebrücke, einen Betonmischer, ein Silo, Hebezeug, einen Vertikaltank oder dergleichen anschließt. Derartige Nutzfahrzeuge werden von der Anmelderin unter der Typenbezeichnung LX, HX und SX hergestellt und haben sich in der Praxis hervorragend bewährt.

In Figur 7 ist ein vierachsig ausgebildeter Lastwagen 1 vom Typ HX 32.430 8x8 dargestellt. Der Fahrgestellrahmen besteht dabei im Wesentlichen aus zwei durch Querträger verbundene Rahmenlängsträger 4. Der Fahrzeugrahmen ist torsionsweich ausgelegt, und besteht aus U-Profilen mit 7mm - 9,5mm starkem hochfestem Feinkornstahl. Im vorderen Bereich der Rahmenlängsträger 4 sind zwei Vorderachsen 12 und im hinteren Bereich zwei Hinterachsen 13 angeordnet. Auf das am vorderen Ende angeordnete Fahrerhaus 14 folgt in Längsrichtung ein Aggregatgestell 2 mit einem Kühlaggregat 11. Das Aggregatgestell 2 weist zwei Längsträgerelemente 5 auf, die bodenseitig mit den Rahmenlängsträgern 4 verbunden sind. Auf das Aggregatgestell 2 folgt in Längsrichtung der Aufbaurahmen 3, im vorliegenden Beispiel eine Ladebrücke. Der Aufbaurahmen 3 weist ebenfalls zwei Längsträgerelemente 6 auf, die bodenseitig mit den Rahmenlängsträgern 4 verbunden sind.

Insbesondere bei Geländefahrten wird der Fahrzeugrahmen hohen Biege- und Torsionsspannungen ausgesetzt. Zwar wird der Fahrzeugrahmen durch die bodenseitigen Längsträgerelemente des Aggregatgestells 2 und des Aufbaurahmens 3 verstärkt. Im Übergangsbereich vom Aggregatgestell 2 zum Aufbaurahmen 3 besteht jedoch eine Unterbrechung im Kraftfluss, weshalb es hier zu Spannungsspitzen kommen kann, die im Extremfall zu einem Riss des Fahrzeugrahmens führen können.

Aufgabe der vorliegenden Erfindung ist es daher bei Nutzfahrzeugen, insbesondere bei Lastkraftwagen mit Aggregatgestell und Aufbaurahmen, die Belastung der Rahmenlängsträger während des Fahrbetriebs zu vergleichmäßigen und Spannungssprünge zu vermeiden, die im Extremfall zum Riss des Fahrzeugrahmens führen können. Ferner soll eine einfache Montage und Demontage ermöglicht werden, um die Austauschbarkeit von Aggregatgestell und Aufnahmerahmen zu gewährleisten. Außerdem soll eine einfache kostengünstige Lösung geschaffen werden.

Diese Aufgabe wird durch ein erfindungsgemäßes Nutzfahrzeug mit den Merkmalen des Patentanspruchs 1 gelöst. Vorteilhafte Ausführungsformen und Weiterbildungen der Erfindung werden in den Unteransprüchen beschrieben.

Die vorliegende Erfindung sieht ein Nutzfahrzeug vor, insbesondere einen Lastkraftwagen, mit einem Aggregatgestell und einem Aufbaurahmen, wobei das Nutzfahrzeug einen Fahrzeugrahmen mit Rahmenlängsträgern aufweist und wobei das Aggregatgestell und der Aufbaurahmen Längsträgerelemente aufweisen, die an den Rahmenlängsträgern befestigt sind. Erfindungsgemäß sind die Längsträgerelemente des Aggregatgestells und des Aufbaurahmens in einem Anschlussbereich zueinander fluchtend angeordnet und form- und/oder kraftschlüssig miteinander verbunden und die Längsträgerelemente des Aggregatgestells und des Aufbaurahmens sind im Anschlussbereich an dem Rahmenlängsträger befestigt. Hierdurch wird die Belastung der Rahmenlängsträger während des Fahrbetriebs vergleichmäßigt und Spannungssprünge vermieden, die im Extremfall zum Riss des Fahrzeugrahmens führen können. Ferner wird eine einfache Montage und Demontage ermöglicht, welche die Austauschbarkeit von Aggregatgestell und Aufnahmerahmen gewährleisten. Hierdurch wird eine einfache kostengünstige Lösung geschaffen.

Eine vorteilhafte Ausführungsform der vorliegenden Erfindung sieht vor, dass zur Verbindung der Längsträgerelemente im Anschlussbereich ein Innenschuh angeordnet ist, der mit den sich gegenüberliegenden Längsträgerelementen verschraubt ist. Hierdurch wird eine kraft- und formschlüssige Verbindung zwischen den Längsträgerelementen des Aggregatgestells und den Längsträgern des Aufbaurahmens geschaffen.

Eine vorteilhafte Weiterbildung sieht dabei vor, dass der Innenschuh als U-Profil ausgebildet ist. Dies bietet sich insbesondere an, wenn die zu verbindenden Längsträgerelemente ebenfalls als U-Profile ausgelegt sind. Allerdings könnte der Innenschuh auch als Hohlprofil oder als L-Profil ausgebildet sein. Bei Verwendung eines Vierkant-Hohlprofils als Innenschuh wird eine torsionssteife Verbindung geschaffen. Die Überdeckung des Längsträgerelements des Aggregataufbaus und des Längsträgerelements des Aufbaurahmens durch den Innenschuh ist dabei so gewählt, dass sie bei größerer Belastung des Anschlussbereichs größer ist als bei kleiner Belastung.

Noch eine vorteilhafte Weiterbildung der vorliegenden Erfindung sieht vor, dass
die Verschraubung zwischen den Längsträgerelementen und dem Innenschuh mit Scherbüchsen erfolgt. Hierdurch kann die Dehnlänge der Schrauben vergrößert und diese von Querkraftspitzen entlastet werden.

Eine alternative Ausführungsform der vorliegenden Erfindung sieht vor, dass zur Verbindung der Längsträgerelemente im Anschlussbereich an den sich gegenüberliegenden Profilstirnseiten Flanschplatten angeordnet sind, die miteinander verschraubt sind. Hierdurch wird eine kraftschlüssige Verbindung geschaffen. Diese Lösung bietet sich vor allem für leichtere Aufbauten bzw. bei geringeren Lasten an.

Eine Weiterbildung der vorliegenden Erfindung sieht vor, dass die Verbindung zwischen dem Anschlussbereich und dem Rahmenlängsträger über zumindest eine Anschlussplatte erfolgt, die mit den Längsträgerelementen und dem Rahmenlängsträger verschraubt ist. Im Falle der Flanschverbindung des Längsträgerelements des Aggregatgestells und des Längsträgerelements des Aufbaurahmens werden hier in der Regel zwei Anschlussplatten je Fahrzeugseite zur Anwendung kommen.

Die Anschlussplatte kann dabei als Flachstahl oder als L-Profil ausgelegt sein. In letzterem Fall kann sich der L-Schenkel auf der Oberseite der Längsträgerelemente von Aggregatgestell und Aufbaurahmen abstützen.

Noch eine weitere vorteilhafte Ausführungsform der vorliegenden Erfindung sieht vor, dass die Längsträgerelemente des Aggregatgestells und des Aufbaurahmens als U-Profile ausgebildet sind. Hier lässt sich sehr einfach durch einen Innenschuh eine kraft- und formschlüssige Verbindung herstellen.

Schließlich sieht eine weitere vorteilhafte Ausführungsform der vorliegenden Erfindung vor, dass die Längsträgerelemente des Aufbaurahmens im an den Anschlussbereich anschließenden Abschnitt von einem Zusatzgerät, insbesondere einem Kran, überbaut sind. Insbesondere bei diesem Anwendungsfall ist eine Vergleichmäßigung des Momentenverlaufs wünschenswert.

Nachfolgend wird die Erfindung anhand von vorteilhaften Ausführungsformen zusammen mit den beigefügten Zeichnungen näher beschrieben. Darin zeigen
Fig. 1 eine Seitenansicht einer vorteilhaften Ausführungsform eines erfindungsgemäßen Nutzfahrzeugs als Ausschnitt;
Fig. 2 eine Detailansicht II des Anschlussbereichs aus Figur 1;
Fig. 3 eine Schnittansicht entlang der Linie III - III aus Figur 2;
Fig. 4 eine perspektivische Ansicht eines Aggregatgestells mit Anschlussbereich und Rahmenlängsträgern;
Fig. 5 eine Detailansicht einer alternativen Ausführungsform eines Anschlussbereichs;
Fig. 6 eine Schnittansicht entlang der Linie VI - VI aus Figur 5;
Fig. 7 ein Nutzfahrzeug vom Stand der Technik.

Die Nachfolgenden Figuren sind schematische Darstellungen und dienen der Erläuterung der Erfindung. Gleiche und ähnliche Bauteile werden durch gleiche Bezugszeichen dargestellt. Die Richtungsangaben beziehen sich auf die Zeichnungsebene, sofern nicht etwas anderes angegeben ist.

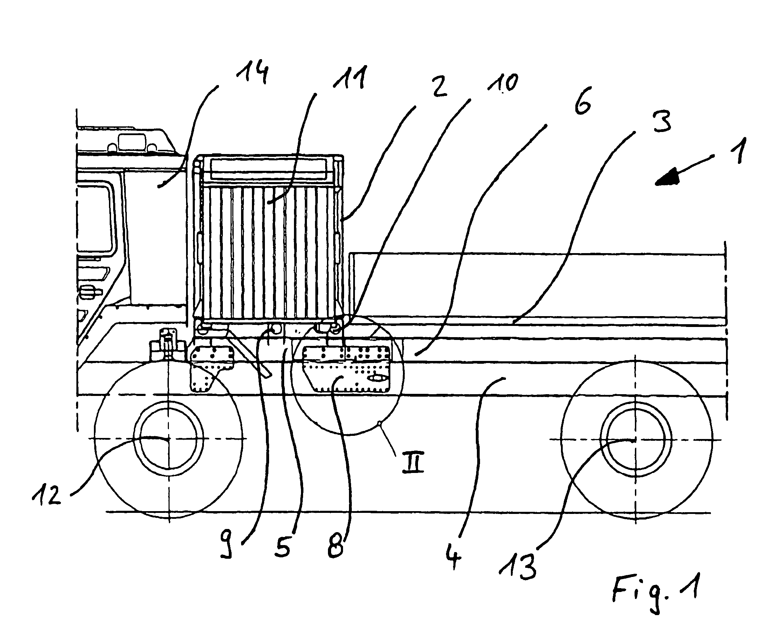

Eine erste vorteilhafte Ausführungsform eines erfindungsgemäßen Nutzfahrzeugs, nämlich ein Lastkraftwagen 1, wird in den Figuren 1 bis 4 gezeigt und nachfolgend beschrieben.

In Figur 1 sind in der Zeichnungsebene von links nach rechts ein Fahrerhaus 14 und in Fahrzeuglängsrichtung daran anschließend ein Aggregatgestell 2 für ein Kühlaggregat 11 gefolgt von einem als Ladebrücke ausgebildeten Aufbaurahmen 3 auf einem Rahmenträger 4 angeordnet. Bei dem vorliegenden Ausführungsbeispiel handelt es sich um einen zweiachsigen Lastkraftwagen 1 mit einer gelenkten Vorderachse 12 und einer angetriebenen Hinterachse 13.

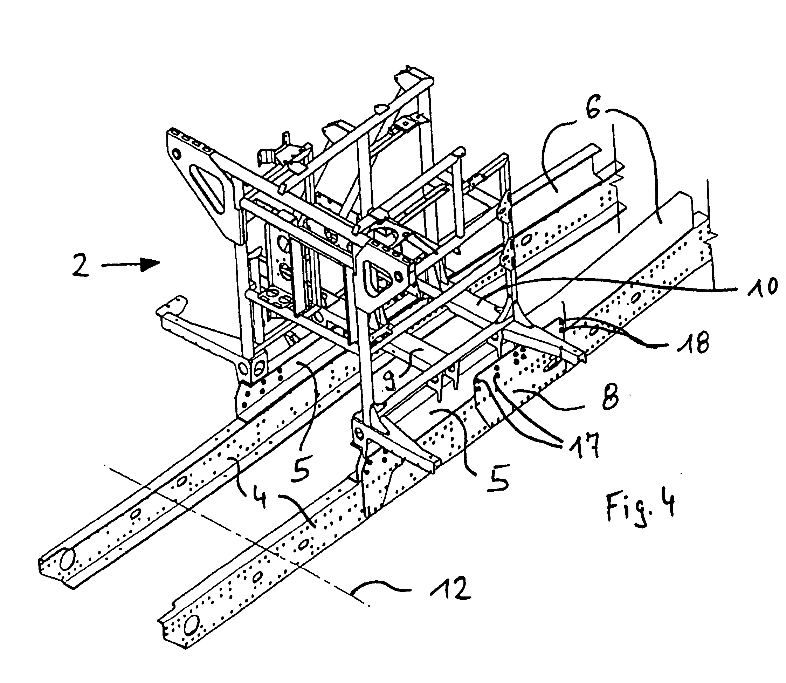

Das Aggregatgestell 2 ist perspektivisch ohne Einbauten in Figur 4 dargestellt. Das Aggregatgestell 2 ist als Profilrahmenkonstruktion mit verschweißten Stahlprofilen ausgelegt, und weist eine im Wesentlichen quaderförmige Gestalt auf. Im Bodenbereich weist das Aggregatgestell 2 zwei parallel verlaufende Längsträgerelemente 5 auf, die durch Querträger 9 und 10 verbunden sind. Die Längsträgerelemente 5 sind dabei als U-Profile ausgebildet, deren Öffnung nach innen, aufeinander zu gerichtet ist. Die Längsträger 5 bestehen bei der vorliegenden Ausführungsform aus hochfestem 6mm - 8mm starkem Feinkornstahl.

Wie aus Figuren 1 und 4 zu erkennen ist, schließen sich an die Profilstirnseiten 16 der beiden Längsträgerelemente 5 fluchtend zwei Längsträgerelemente 6 an, die die Basis des Aufbaurahmens 3 bilden. Auch die Längsträger 6 sind über (nicht gezeigte) Querträger miteinander verbunden und als U-Profile ausgebildet. Auch die Längsträger 6 bestehen aus 6mm - 8mm starkem hochfestem Feinkornstahl. Sowohl die Längsträger 5 als auch die Längsträger 6 sind mit den Rahmenlängsträgern 4 des Fahrzeugrahmens verbunden.

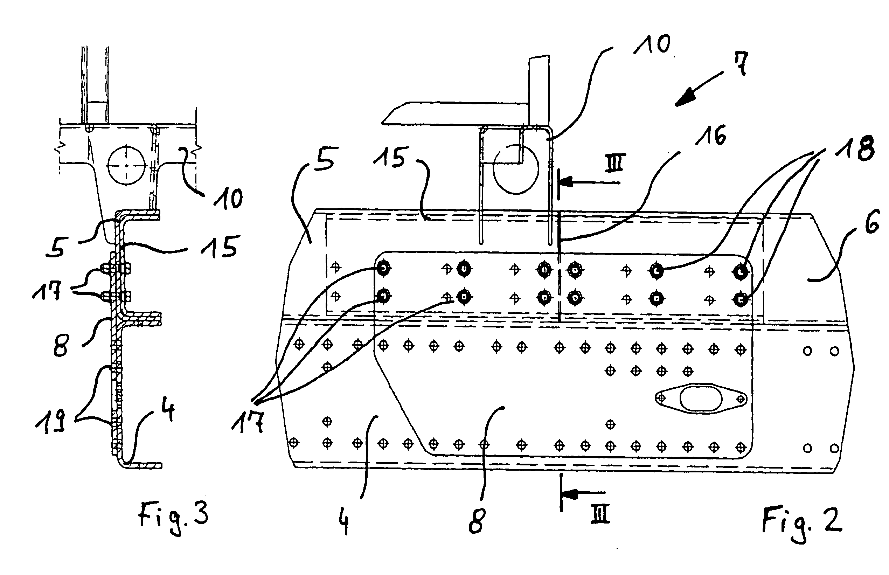

Im Gegensatz zu den bekannten Aufbauten vom Stand der Technik, sind die Längsträgerelemente 5 des Aggregatgestells 2 und die Längsträgerelemente 6 des Aufbaurahmens 3 jedoch nicht nur mit den beiden Rahmenlängsträgern 4 des Fahrzeugrahmens verbunden, sondern sie weisen auch untereinander eine starre form- und kraftschlüssige Verbindung in einem Anschlussbereich 7 auf, der als Detail II in Figuren 2 und 3 vergrößert dargestellt ist. Bei der dargestellten ersten vorteilhaften Ausführungsform wird ein ebenfalls als U-Profil ausgebildeter Innenschuh 15 mit den Längsträgerelementen 5 und 6 überlappend verschraubt. Dabei ist der Innenschuh 15 so profiliert, dass zu den oberen und unteren U-Schenkeln des Längsträgers 5 und des Längsträgers 6 etwa 2 mm Luft verbleiben.

Der Anschlussbereich 7 zwischen den Längsträgern 5 des Aggregatgestells 2 und den Längsträgern 6 des Aufbaurahmens 3 ist an der Basis der U-Profile über eine als Flachprofil ausgebildete Anschlussplatte 8 mit den Rahmenlängsträgern 4 des Fahrzeugrahmens verbunden. Die Anschlussplatte 8 ist dabei im wesentlichen rechteckförmig mit abgerundeten Ecken und einer diagonalen Vorderkante, in der Zeichnungsebene links unten, ausgebildet. Die Verbindung erfolgt im Bereich der Längsträgerelemente 5 des Aggregatgestells 2 über sechs Verschraubungen 17 und im Bereich der Längsträgerelemente 6 des Aufbaurahmens 3 ebenfalls über sechs Verschraubungen 18. Im Bereich der Rahmenlängsträger 4 sind ebenfalls eine ausreichende Zahl an (nicht dargestellten) Verschraubungen 19 angebracht. Die Verschraubungen erfolgen mit selbsthemmenden Muttern, um ein ungewolltes Lösen der während des Fahrbetriebs zu verhindern.

Grundsätzlich ergeben sich die Ausführung der Innenschuhe, der äußeren Platten sowie Anzahl und Position der Verbindungsschrauben aus Art und Höhe der auftretenden Belastungen.

Die Schraubverbindung 17 in Figur 2 ist besonders anschaulich als Schnitt entlang der Linie III - III in Figur 3 dargestellt. Insbesondere ist hier auch der in Figur 2 nur als gestrichelte Linie angedeutete Innenschuh 15 im Querschnitt dargestellt. Ferner ist aus Figur 3 zu entnehmen, dass die Verschraubung 17 der Anschlussplatte 8 durch den Längsträger 5 und durch den Innenschuh 15 hindurchgeht und diese drei Elemente miteinander verbindet. Die Anschlussplatte 8 überdeckt nahezu die gesamte Profilbreite des Rahmenlängsträgers 4 und endet auf etwa 2/3 der Breite des Längsträgers 5 des Aggregatgestells 2, da hier im oberen Bereich Versteifungselemente des Querträgers 10 das Profil des Längsträgers 5 umfassen. Im Bereich des Rahmenlängsträgers 4 sind die Verschraubungen 19 angedeutet.

Durch die Verbindung mittels Innenschuh 15 und Anschlussplatte 8 wird eine biege- und verwindungssteife Verbindung zwischen den Längsträgern 5 des Aggregatgestells 2, den Längsträgern 6 des Aufbaurahmens 3 und den Rahmenlängsträgern 4 erzeugt. Im Gegensatz zum Stand der Technik läuft die erfindungsgemäße Verbindung von Fahrzeugrahmen und Aufbauten im Fahrzeugheck "weich" aus, d.h. die Verbindung im vorderen Drittel ist steif, während sie im hinteren Drittel elastisch ist. Dies führt neben der Verhinderung von Spannungsspitzen im Fahrzeugrahmen zu einer verbesserten Fahrzeugstabilität bei Geländefahrten.

Die Verbindung der Längsträgerelemente 5 des Aggregatgestells 2 und der Längsträgerelemente 6 des Aufbaurahmens 3 mittels eines Innenschuhs 15 wird einfach und kostengünstig bewerkstelligt, da es sich bei dem Innenschuh 15 um ein einfaches Blechbiegeteil mit vorgestanzten Bohrungen handelt. Der Innenschuh 15 weist dabei ein definiertes Lochmuster zur Aufnahme der Schraubverbindungen 17, 18 auf, die von dem Fahrzeughersteller bzw. von Komponentenanbietern übernommen werden. Die Montage des Innenschuhs 15 kann auch nachträglich erfolgen, d.h. bestehende Nutzfahrzeuge können mit der vorliegenden Komplettierungslösung nachgerüstet werden.

Ferner lässt sich ein einfacher und problemloser Austausch, beispielsweise des Kühlaggregats 11 samt Aggregatgestells 2 bewerkstelligen, indem die an der linken und rechten Fahrzeugseite angebrachten Innenschuhe 15 und die Anschlussplatten 8 zunächst einfach jeweils durch Lösen der sechs Schraubverbindungen 17 und der sechs Schraubverbindungen 18 sowie der Verschraubungen 19 der Anschlussplatte 8 mit den Rahmenlängsträgern 4 demontiert werden und das Aggregatgestell 2 nach Lösen der sonstigen verbleibenden Verbindungen herausgehoben und durch ein Austauschaggregat ersetzt wird.

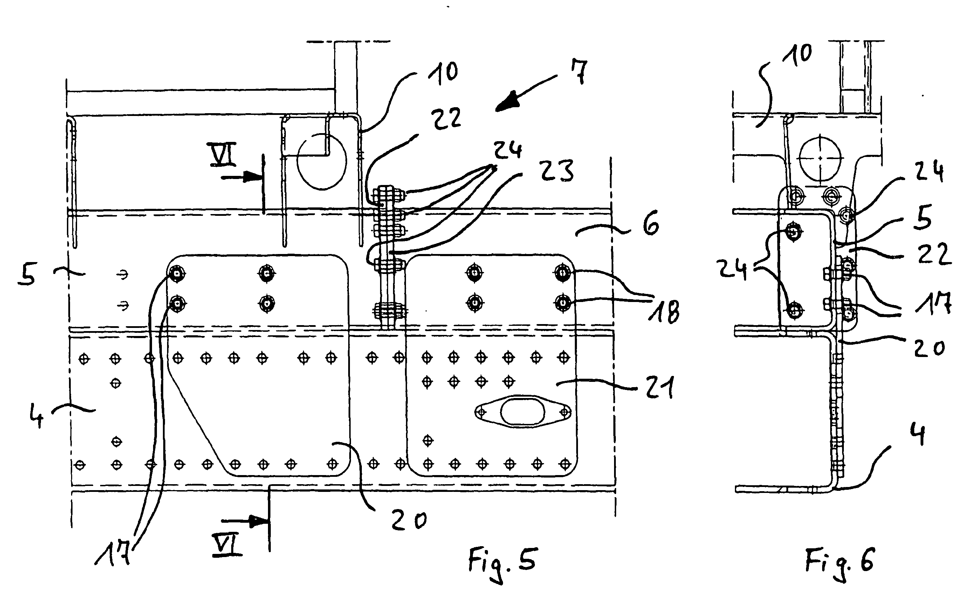

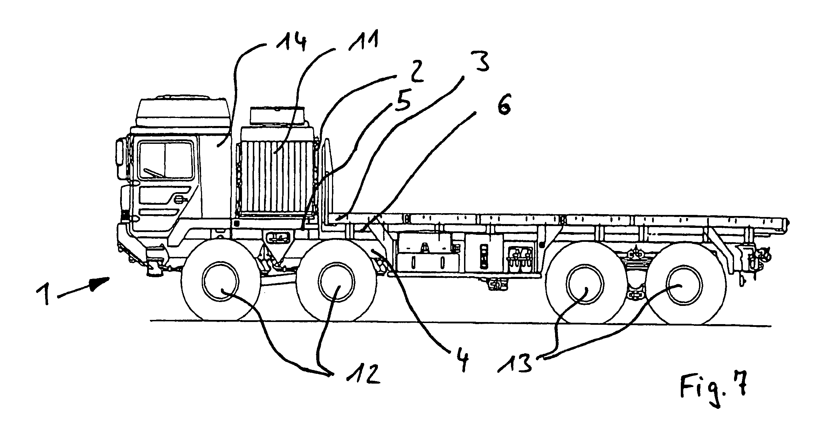

Figur 5 und Figur 6 zeigen eine alternative Ausführungsform des Details II aus Figur 1. Hauptunterschied gegenüber der in Figuren 2 und 3 dargestellten Ausführungsform sind, dass die Verbindung der Längsträgerelemente 5 und 6 über einen Flansch 22 an der Stirnseite des Längsträgerelements 5 und einen Flansch 23 an der Stirnseite des Längsträgerelements 6 und die Verbindung mit dem Rahmenlängsträger 4 über eine vordere Anschlussplatte 20 und eine hintere Anschlussplatte 21 erfolgt.

Figur 6 zeigt eine Schnittansicht entlang der Linie VI - VI aus Figur 5. Der im Wesentlichen rechteckförmig ausgebildete Flansch 22 erstreckt sich dabei über den gesamten Profilquerschnitt des Längsträgerelements 5 des Aggregatgestells 2 und ragt oben und an der in der Zeichnungsebene rechten Seite über das U-Profil des Längsträgerelements 5 heraus. Die Verschraubung erfolgt im vorliegenden Ausführungsbeispiel mit sechs Schraubverbindungen 24, von denen vier Schraubverbindungen außerhalb des Profilquerschnitts angebracht sind und zwei Schraubverbindungen innerhalb des Profilquerschnitts angebracht sind. Auch hier erfolgt die Verschraubung mit selbsthemmenden Muttern, um ein ungewolltes Lösen der Verschraubung 24 während des Fahrbetriebs zu verhindern.

Ebenso wie bei der Innenschuh-Lösung richten sich Art und Ausführung der Flanschverbindung, der Außenplatten sowie Anzahl und Position der Verbindungsschrauben nach Art und Höhe der auftretenden Belastungen.

Wegen der seitlich hervorstehenden Flansche 22, 23, sind im Falle der zweiten Ausführung gemäß Figuren 5 und 6 eine vordere Anschlussplatte 20 und eine hintere Anschlussplatte 21 vorgesehen. Die vordere Anschlussplatte 20 wird mit der Verschraubung 17 an das Längsträgerelement 5 des Aggregatgestells 2 montiert und ist in der unteren Hälfte mit dem Rahmenlängsträger 4 verschraubt. Die hintere Anschlussplatte 21 ist mit der Verschraubung 18 an das Längsträgerelement 6 des Aufbaurahmens montiert und ist in der unteren Hälfte mit dem Rahmenlängsträger 4 verschraubt. Im Gegesatz zu der ersten Ausführungsform werden hier immer nur zwei übereinander liegende Elemete mit einer Schraubverbindung verbunden. Der an dem Längsträgerelement 5 angeordnete vordere Flansch 22 und der am Längsträgerelement 6 angeordnete Flansch 23 sind über die Flanschverschraubung 24 miteinander verschraubt. Die Anschlussplatten 20, 21 und die Flanschverbindung 22, 23, 24 bilden zusammen den Anschlussbereich 7. Der Anschlussbereich 7 ist auf der linken und der rechten Fahrzeugseite vorhanden.

### Bezugszeichenliste

- 1: Lastkraftwagen
- 2: Aggregatgestell
- 3: Aufbaurahmen
- 4: Rahmenlängsträger
- 5: Längsträgerelement
- 6: Längsträgerelement
- 7: Anschlussbereich
- 8: Anschlussplatte
- 9: Querträger
- 10: Querträger
- 11: Kühlaggregat
- 12: Vorderachse
- 13: Hinterachse
- 14: Fahrerhaus
- 15: Innenschuh
- 16: Profilstimseite
- 17: Verschraubung
- 18: Verschraubung
- 19: Verschraubung
- 20: Vordere Anschlussplatte
- 21: Hintere Anschlussplatte
- 22: Flansch Aggregatgestell
- 23: Flansch Aufbaurahmen
- 24: Flanschverschraubung

## Patentansprüche

1. Nutzfahrzeug, insbesondere Lastkraftwagen (1), mit einem Aggregatgestell (2) und einem Aufbaurahmen (3), wobei das Nutzfahrzeug einen Fahrzeugrahmen mit Rahmenlängsträgern (4) aufweist und wobei das Aggregatgestell (2) und der Aufbaurahmen (3) Längsträgerelemente (5, 6) aufweisen, die an den Rahmenlängsträgern (4) befestigt sind,
**dadurch gekennzeichnet, dass**
die Längsträgerelemente (5, 6) des Aggregatgestells (2) und des Aufbaurahmens (3) in einem Anschlussbereich (7) zueinander fluchtend angeordnet und form- und/oder kraftschlüssig miteinander verbunden sind, und dass die Längsträgerelemente (5, 6) im Anschlussbereich (7) an dem Rahmenlängsträger (4) befestigt sind.

2. Nutzfahrzeug, insbesondere Lastkraftwagen (1), mit Aggregatgestell (2) und Aufbaurahmen (3) nach Patentanspruch 1,
**dadurch gekennzeichnet, dass**
im Anschlussbereich (7) ein Innenschuh (15) zum Verbinden der Längsträgerelemente (5, 6) vorgesehen ist, der mit den sich gegenüberliegenden Längsträgerelementen (5, 6) verschraubt ist.

3. Nutzfahrzeug, insbesondere Lastkraftwagen (1), mit Aggregatgestell (2) und Aufbaurahmen (3) nach Patentanspruch 2,
**dadurch gekennzeichnet, dass**
der Innenschuh (15) als U-Profil ausgelegt ist.

4. Nutzfahrzeug, insbesondere Lastkraftwagen (1), mit Aggregatgestell (2) und Aufbaurahmen (3) nach Patentanspruch 2 oder 3,
**dadurch gekennzeichnet, dass**
die Verschraubung zwischen den Längsträgerelementen (5, 6) und dem Innenschuh (15) mit Scherbüchse erfolgt.

5. Nutzfahrzeug, insbesondere Lastkraftwagen (1), mit Aggregatgestell (2) und Aufbaurahmen (3) nach Patentanspruch 1,
**dadurch gekennzeichnet, dass**
zur Verbindung der Längsträgerelemente (5, 6) im Anschlussbereich (7) an den sich gegenüberliegenden Profilstirnseiten Flansche (22, 23) angeordnet sind, die miteinander verschraubt sind.

6. Nutzfahrzeug, insbesondere Lastkraftwagen (1), mit Aggregatgestell (2) und Aufbaurahmen (3) nach einem der voranstehenden Patentansprüche,
**dadurch gekennzeichnet, dass**
zumindest eine Anschlussplatte (8; 20, 21) vorgesehen ist, die mit den Längsträgerelementen (5, 6) und dem Rahmenlängsträger (4) verschraubt ist.

7. Nutzfahrzeug, insbesondere Lastkraftwagen (1), mit Aggregatgestell (2) und Aufbaurahmen (3) nach Patentanspruch 6
**dadurch gekennzeichnet, dass**
die Anschlussplatte (8; 20, 21) als Flachstahl ausgelegt ist.

8. Nutzfahrzeug, insbesondere Lastkraftwagen (1), mit Aggregatgestell (2) und Aufbaurahmen (3) nach einem der voranstehenden Patentansprüche,
**dadurch gekennzeichnet, dass**
die Längsträgerelemente (5, 6) des Aggregatgestells (2) und des Aufbaurahmens (3) als U-Profile ausgebildet sind.

9. Nutzfahrzeug, insbesondere Lastkraftwagen (1), mit Aggregatgestell (2) und Aufbaurahmen (3) nach einem der voranstehenden Patentansprüche,
**dadurch gekennzeichnet, dass**
die Längsträgerelemente (6) des Aufbaurahmens im an den Anschlussbereich (7) anschließenden Abschnitt von einem Zusatzgerät, insbesondere einem Kran, überbaut sind.

## Claims

1. Commercial vehicle, in particular a truck (1), with a unit rack (2) and a superstructure frame (3), whereby the commercial vehicle has a vehicle frame with frame longitudinal members (4) and whereby the unit frame (2) and the superstructure frame (3) have longitudinal member elements (5, 6) fastened to the frame longitudinal members (4), **characterised in that** the longitudinal member elements (5, 6) of the unit rack (2) and superstructure frame (3) are aligned relative to and positively connected with each other in a connection area (7) and that the longitudinal member elements (5, 6) are fastened to the frame longitudinal member (4) in the connection area (7).

2. Commercial vehicle, in particular a truck (1), with a unit rack (2) and a superstructure frame (3) according to Claim 1, **characterised in that** an inside shoe (15) for connecting the longitudinal member elements (5, 6) is provided in the connection area (7) and is bolted to the longitudinal member elements (5, 6) facing each other.

3. Commercial vehicle, in particular a truck (1), with a unit rack (2) and a superstructure frame (3) according to Claim 2, **characterised in that** the inside shoe (15) is designed as a U-section.

4. Commercial vehicle, in particular a truck (1), with a unit rack (2) and a superstructure frame (3) according to Claim 2 or 3, **characterised in that** the bolted connection between the longitudinal member elements (5, 6) and the inside shoe (15) is established with the aid of a shearing bush.

5. Commercial vehicle, in particular a truck (1), with a unit rack (2) and a superstructure frame (3) according to Claim 1, **characterised in that** flanges (22, 23) are arranged at the sectional end faces facing each other and are bolted to each other.

6. Commercial vehicle, in particular a truck (1), with a unit rack (2) and a superstructure frame (3) according to one of the foregoing Claims, **characterised in that** at least one connection plate (8; 20, 21) bolted to the longitudinal member elements (6) and the frame longitudinal member (4) is provided.

7. Commercial vehicle, in particular a truck (1), with a unit rack (2) and a superstructure frame (3) according to Claim 6, **characterised in that** the connection plate (8; 20, 21) is designed as a flat steel piece.

8. Commercial vehicle, in particular a truck (1), with a unit rack (2) and a superstructure frame (3) according to one of the foregoing Claims, **characterised in that** the longitudinal member elements (5, 6) of the unit rack (2) and superstructure frame (3) are designed as U-sections.

9. Commercial vehicle, in particular a truck (1), with a unit rack (2) and a superstructure frame (3) according to one of the foregoing Claims, **characterised in that** an additional unit, in particular a crane, is superimposed on the longitudinal member elements (5, 6) of the superstructure frame (3) in the section adjacent to the connection area (7).

## Revendications

1. Véhicule industriel, en particulier camion (1), équipé d'un bâti pour organes (2) et d'un cadre porteur pour la carrosserie (3), le véhicule industriel disposant d'un cadre de châssis avec longerons (4) et le bâti pour organes (2) et le cadre porteur pour la carrosserie (3) disposant d'éléments de longeron (5, 6) qui sont fixés sur les longerons du cadre de châssis (4), **caractérisé en ce** qui les éléments de longeron (5, 6) du bâti pour organes (2) et du cadre porteur pour la carrosserie (3) sont disposés dans une zone de raccordement (7) en alignement les uns par rapport aux autres et reliés entre eux par obstacle et/ou par adhérence et que les éléments de longeron (5, 6) sont fixés sur le longeron du cadre de châssis (4) dans la zone de raccordement (7).

2. Véhicule industriel, en particulier camion (1), équipé d'un bâti pour organes (2) et d'un cadre porteur pour la carrosserie (3) selon la revendication 1, **caractérisé en ce qu'**un sabot intérieur (15) destiné à relier les éléments de longeron (5, 6) et vissé avec les éléments de longeron (5, 6) situés en vis-à-vis est prévu dans la zone de raccordement (7).

3. Véhicule industriel, en particulier camion (1), équipé d'un bâti pour organes (2) et d'un cadre porteur pour la carrosserie (3) selon la revendication 2, **caractérisé en ce que** le sabot intérieur (15) est conçu sous forme de profilé en U.

4. Véhicule industriel, en particulier camion (1), équipé d'un bâti pour organes (2) et d'un cadre porteur pour la carrosserie (3) selon la revendication 2 ou 3, **caractérisé en ce que** le vissage entre les éléments de longeron (5, 6) et le sabot intérieur (15) est réalisé au moyen d'une douille de cisaillement.

5. Véhicule industriel, en particulier camion (1), équipé d'un bâti pour organes (2) et d'un cadre porteur pour la carrosserie (3) selon la revendication 1, **caractérisé en ce que** des plateaux (22, 23) servant à relier les éléments de longeron (5, 6) sont disposés dans la zone de raccordement (7) aux faces frontales des profilés situés en vis-à-vis et que ces plateaux sont vissés entre eux.

6. Véhicule industriel, en particulier camion (1), équipé d'un bâti pour organes (2) et d'un cadre porteur pour la carrosserie (3) selon l'une des revendications précitées, **caractérisé en ce qu'**au moins une plaque de raccordement (8, 20, 21) est prévue qui est vissée avec les éléments de longeron (5, 6) et le longeron du cadre de châssis (4).

7. Véhicule industriel, en particulier camion (1), équipé d'un bâti pour organes (2) et d'un cadre porteur pour la carrosserie (3) selon la revendication 6, **caractérisé en ce que** la plaque de raccordement (8, 20, 21) est conçue sous forme d'acier plat.

8. Véhicule industriel, en particulier camion (1), équipé d'un bâti pour organes (2) et d'un cadre porteur pour la carrosserie (3) selon l'une des revendications précitées, **caractérisé en ce que** les éléments de longeron (5, 6) du bâti pour organes (2) et du cadre porteur pour la carrosserie (3) sont conçus sous forme de profilés en U.

9. Véhicule industriel, en particulier camion (1), équipé d'un bâti pour organes (2) et d'un cadre porteur pour la carrosserie (3) selon l'une des revendications précitées, **caractérisé en ce qu'**un appareil supplémentaire, en particulier une grue, est posé sur le dessus des éléments de longeron (6) du cadre porteur pour la carrosserie dans la zone adjacente à la zone de raccordement (7).
